Europäisches Patentamt

European Patent Office

Office européen des brevets

(11) Veröffentlichungsnummer: **0 404 094**

**A1**

(12) # EUROPÄISCHE PATENTANMELDUNG

(21) Anmeldenummer: **90111634.3**

(22) Anmeldetag: **20.06.90**

(51) Int. Cl.5: **A01F 15/08**

(30) Priorität: **23.06.89 US 370552**

(43) Veröffentlichungstag der Anmeldung:
**27.12.90 Patentblatt 90/52**

(84) Benannte Vertragsstaaten:
**DE FR GB IT**

(71) Anmelder: **DEERE & COMPANY**
**1 John Deere Road**
**Moline, Illinois 61265(US)**

(72) Erfinder: **Anstey, Henry Dennis**
**Rural Route 4, Box 188A**
**Ottumwa, Iowa 52501(US)**
Erfinder: **Rumph, George William**
**Rural Route 3, Box 183**
**Bloomfield, Iowa 52537(US)**

(74) Vertreter: **Feldmann, Bernhard et al**
**DEERE & COMPANY European Office Patent**
**Department Steubenstrasse 36-42**
**D-6800 Mannheim 1(DE)**

(54) **Rundballenpresse mit einer Vorrichtung zum Umhüllen eines in einer Ballenformkammer gewickelten Rundballens.**

(57) Bei einer Rundballenpresse mit einer Vorrichtung zum Umhüllen eines in einer Ballenformkammer fertig gewickelten Rundballens aus landwirtschaftlichem Gut mit einem eine Bodenwand (42) aufweisenden Zuführgehäuse (38) und einer Ladevorrichtung für eine Rolle (74) aus Umhüllungsmaterial, die um eine horizontal verlaufende Achse aus einer tiefer gelegenen Ladeposition in eine höher gelegene Betriebsstellung verschwenkbar ist, ist die Ladevorrichtung als Ladebügel (62) ausgebildet und derart geformt, daß in der Ladeposition die Rolle (74) mit Umhüllungsmaterial in dem Bügel des Ladebügels (62) satt aufliegt und in der Betriebsstellung auf die Bodenwand (42) abgelegt wird.

FIG. 2

## Rundballenpresse mit einer Vorrichtung zum Umhüllen eines in einer Ballenformkammer gewickelten Rundballens

Die Erfindung bezieht sich auf eine Rundballenpresse mit einer Vorrichtung zum Umhüllen eines in einer Ballenformkammer fertig gewickelten Rundballens aus landwirtschaftlichem Gut mit einem eine Bodenwand aufweisenden Zuführgehäuse und einer Ladevorrichtung für eine Rolle aus Umhüllungsmaterial, die um eine horizontal verlaufende Achse aus einer tiefer gelegenen Ladeposition in eine höher gelegene Betriebsstellung verschwenkbar ist.

Bei dieser Rundballenpresse (US-A-4 691 503) ist die Ladevorrichtung als verschwenkbarer Haubenteil ausgebildet, in dem die Bodenwand, Brems- und Halteteile für die Rolle mit dem Umhüllungsmaterial und eine Spreizwalze fest integriert sind. Diese Rundballenpresse weist bereits den Vorteil auf, daß die Rollen Umhüllungsmaterial leicht und ohne größeren körperlichen Aufwand eingelegt werden können, wobei auch der Rollenanfang leicht in die zum Umhüllen erforderlichen Vorrichtungen, wie Spreizwalze und Zuführwalzen, eingezogen werden kann. Der Zugang zu der geschickt ausgebildeten Vorrichtung zum Umhüllen ist einfach und betriebssicher. Allerdings ist zum Verschwenken des Haubenteils in seine Betriebsstellung eine nicht unerhebliche Muskelkraft aufzuwenden, und der Haubenteil muß in seiner Betriebsstellung durch zusätzliche Schikanen gesichert werden. Die Anordnung der Spreizwalze in dem verschwenkbaren Haubenteil erfordert einen relativ großen Schwenkbereich.

Die mit der Erfindung zu lösende Aufgabe wird darin gesehen, die Ladevorrichtung einfacher auszubilden. Diese Aufgabe ist dadurch gelöst worden, daß die Ladevorrichtung als Ladebügel ausgebildet und derart geformt ist, daß in der Ladeposition die Rolle mit Umhüllungsmaterial in dem Bügel des Ladebügels satt aufliegt und in der Betriebs stellung auf die Bodenwand abgelegt wird. Auf diese Weise wird der bekannte auch als Ladevorrichtung dienende Haubenteil durch einen leichten die Rolle mit dem Umhüllungsmaterial auf einem beträchtlichen Umfangssektor umfassenden Ladebügel ersetzt, und die Bodenwand ist nicht mehr mitverschwenkbar. Die Ladevorrichtung ist damit kostengünstiger herzustellen und leicht und einfach zu handhaben.

Zum satten Aufliegen der Rolle mit dem Umhüllungsmaterial wird nach der Erfindung vorgeschlagen, daß der Ladebügel zwei mit Querabstand zueinander angeordnete und parallel verlaufende Schenkel aufweist, die zur Aufnahme der Rolle mit dem Umhüllungsmaterial in der Ladeposition eine Krümmung aufweisen, die dem Außendurchmesser einer vollen Rolle mit Umhüllungsmaterial entspricht.

Vorteilhaft wird die Achse, um die der Ladebügel vertikal schwenkbar ist, unterhalb der rückwärtigen Kante der Bodenwand angeordnet, wobei die Kante abgerundet und durch Abbiegen des rückwärtigen Endes der Bodenwand gebildet ist. Die runde Kante ermöglicht einen guten Übergang der Rolle mit dem Umhüllungsmaterial von dem Ladebügel auf die Bodenwand, ohne daß Beschädigungen an dem Umhüllungsmaterial auftreten oder daß die Bedienungsperson einer Verletzungsgefahr ausgesetzt wäre.

Dadurch, daß die Achse, um die der Ladebügel vertikal schwenkbar ist, derart angeordnet und der Ladebügel derart geformt ist, daß er in seiner Betriebsstellung mit seinem der Achse abgelegenen Ende die Rolle mit Umhüllungsmaterial übergreift und aufgrund seines Schwerpunktes in dieser Stellung verbleibt, wird nach der Erfindung ferner erreicht, daß auf Arretiermittel für den Ladebügel in seiner Betriebsstellung verzichtet werden kann. In der Ladestellung sind solche auch nicht erforderlich, da dort der Ladebügel gegen Teile des Zuführgehäuses anliegen kann und so in seiner dortigen Stellung verbleibt.

Um Verletzungsgefahren auszuschalten, aber auch um die sich in der Betriebsstellung befindliche Rolle mit Umhüllungsmaterial gegen Witterungseinflüsse oder dergleichen zu schützen, ist die Vorrichtung zum Umhüllen eines Rundballens ferner mit einem vertikal verschwenkbaren Deckel versehen, der in der Ladestellung des Ladebügels sich in einer hochgeschwenkten Offenstellung und in der Betriebsstellung des Ladebügels in einer Stellung befindet, in der der Ladebügel und die Bodenwand zumindest von oben und an seinen Seiten von dem Deckel umgriffen sind, wobei die horizontale Achse, um die der Deckel verschwenkbar ist, oberhalb des sich in seiner Betriebsstellung befindlichen Ladebügels angeordnet ist. Durch diese Anordnung des Deckels wird der Ladebügel zusätzlich in seiner Betriebsstellung gesichert, wobei der Deckel darüber hinaus noch derart ausgebildet sein kann, daß er alle sich im Einsatz bewegenden Teile der Umhüllungsvorrichtung abdecken kann.

Zum leichten manuellen Verschwenken des Ladebügels können seine Schenkel an ihren Enden, die der Achse, um die der Ladebügel verschwenkbar ist, abgelegen sind, über einen als Griffteil ausgebildeten Querteil miteinander verbunden sein.

Besonders einfach ist es, wenn die Achse, um die der Ladebügel vertikal verschwenkbar ist, aus abgebogenen Enden der beiden Schenkel des Ladebügels gebildet ist, wobei diese Enden in zueinander ausgerichteten Bohrungen in Scheiben aufgenommen sind, die mit den rückwärtigen oberen Enden zweier mit Querabstand zueinander angeordneter Tragwände des Zuführgehäuses verbunden sind. Die Scheiben können dazu mit ihren unteren Enden an die beiden Tragwände derart angeschweißt werden, daß ihre oberen Teile über die Oberkanten der Tragwände überstehen.

Um beim Verschwenken den Kraftaufwand noch weiter zu verringern, kann der Griffteil der Achse, um die der Ladebügel vertikal verschwenkbar ist, derart zugeordnet sein, daß zum Verschwenken des eine volle Rolle mit Umhüllungsmaterial aufnehmenden Ladebügels aus seiner Ladestellung in seine Betriebsstellung eine Kraft ausreicht, die etwa dem halben Rollengewicht entspricht.

Ein Einfädeln des Rollenanfangs wird dadurch erleichtert, daß die Schenkel des Ladebügels eine relativ kleine Breite aufweisen. Hierdurch behindert der Ladebügel die Bedienungsperson nicht, und der Ladebügel, der einstückig aus Rundmaterial hergestellt werden kann, hat ein relativ leichtes Gewicht.

In der Zeichnung ist ein nachfolgend näher erläutertes Ausführungsbeispiel der Erfindung dargestellt. Es zeigt:

Fig. 1 den rückwärtigen Teil einer großen Rundballenpresse mit angebauter Vorrichtung zum Umhüllen eines Rundballens in perspektivischer Ansicht,

Fig. 2 ein Zuführgehäuse in Seitenansicht mit hochgeschwenktem Deckel und einer Rolle mit Umhüllungsmaterial in ihrer Ladeposition und

Fig. 3 eine ähnliche Darstellung wie in Fig. 2, wobei jedoch der Deckel geschlossen ist und die Rolle mit dem Umhüllungsmaterial sich in ihrer Betriebsstellung befindet.

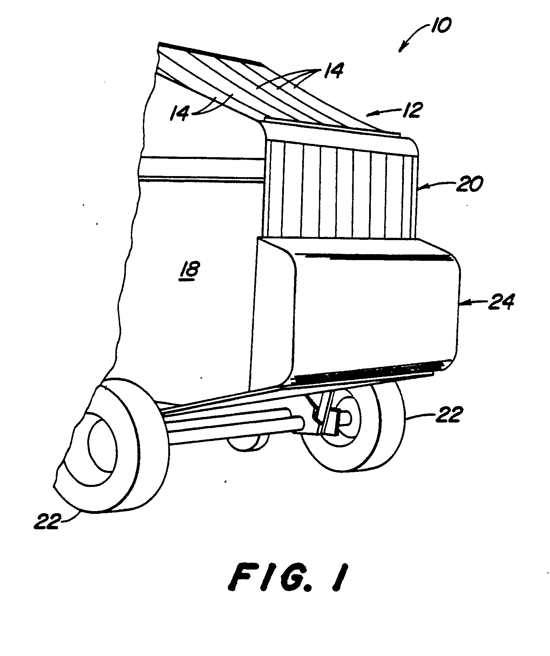

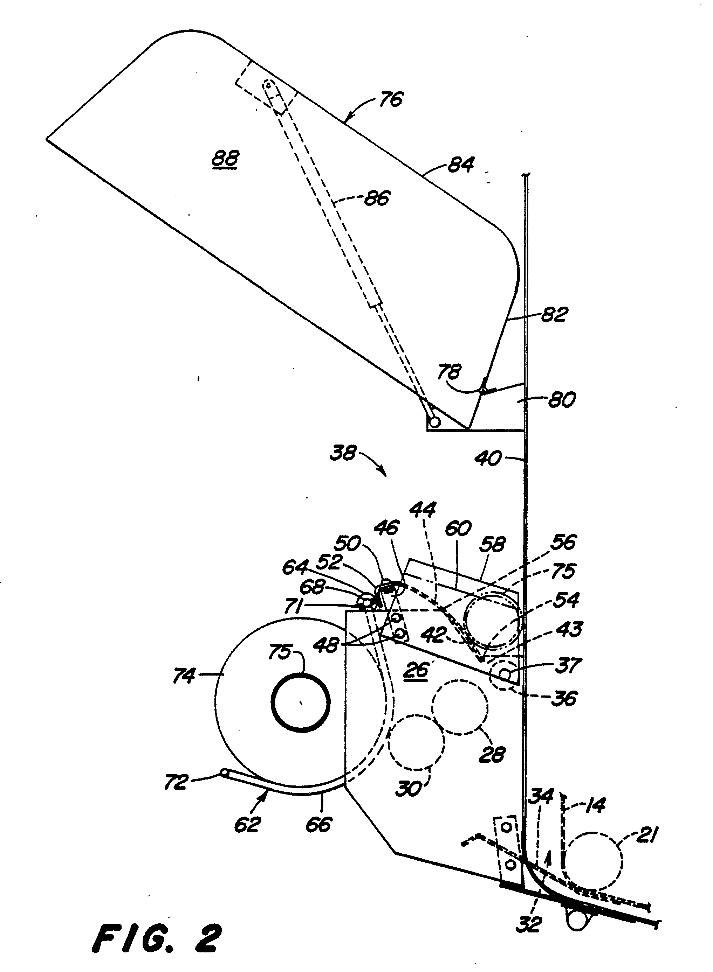

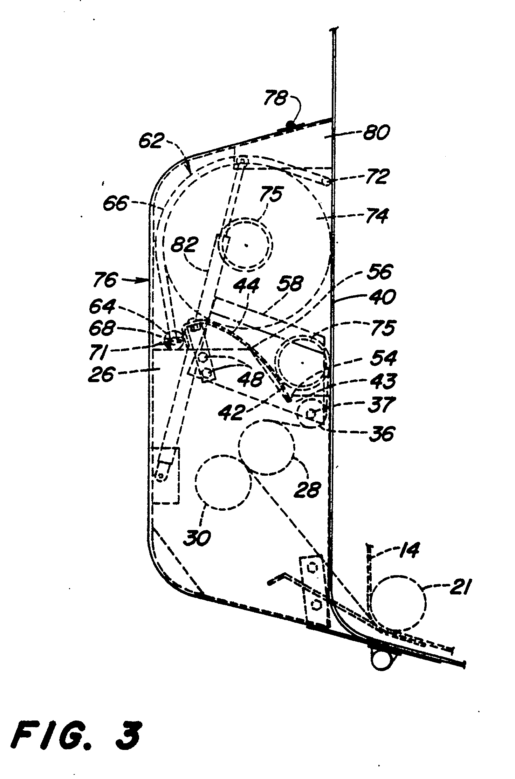

In Fig. 1 der Zeichnung ist der rückwärtige Teil einer großen Rundballenpresse 10 dargestellt, die eine Ballenformkammer 12 veränderbarer Größe aufweist. Letztere ist aus einer Vielzahl von nebeneinanderliegenden endlosen Riemen 14, zwei gegenüberliegenden nicht dargestellten Seitenwänden eines vorderen Teils, die einen ersten Satz Riemenleitrollen aufnehmen, und aus zwei sich gegenüberliegenden Seitenwänden 18 einer Auswurfklappe 20 für den fertig gewickelten Ballen gebildet, die einen zweiten Satz Riemenleitrollen einschließlich einer unteren in Fig. 2 und 3 erkennbaren Riemenleitrolle 21 aufnehmen. Die Rundballenpresse 10 ist auf zwei Laufrädern 22 angeordnet und wird im Einsatz von einem Ackerschlepper gezogen.

Aus den Fig. 2 und 3 ist eine Vorrichtung 24 zum Umwickeln eines fertiggestellten Ballens in der Ballenformkammer 12 mit Umhüllungsmaterial im einzelnen ersichtlich, die an einem rückwärtigen und unteren Teil der Auswurfklappe 20 angeschlossen ist. Die Vorrichtung 24 weist sich gegenüberliegende Tragwände 26 auf, die mit vorderen hochstehenden Flanschen versehen sind, die mit entsprechenden Flanschen an den rückwärtigen Enden der Seitenwände 18 der Auswurfklappe 20 verbindbar sind. Die sich gegenüberliegenden Enden von zwei übereinander angeordneten Zuführwalzen 28 und 30 für das Umhüllungsmaterial sind in den Tragwänden 26 drehbar gelagert. Wie aus den Fig. 2 und 3 ersichtlich ist, liegt die Zuführwalze 28 oberhalb und vor der Zuführwalze 30, so daß ein Zuführweg für das Umhüllungsmaterial entsteht, der tangential zu dem Ausgang der Zuführwalzen 28 und 30 verläuft und sich bis zu einem Einzug 32 erstreckt, der im wesentlichen aus einem Führungsblech 34 und dem Teil der Riemen 14 gebildet wird, die um die untere rückwärtige Riemenleitrolle 21 an der Auswurfklappe 20 geführt sind. Oberhalb und vor der Zuführwalze 28 ist noch eine Spreizwalze 36 in den oberen vorderen Bereichen der Tragwände 26 auf Schrauben 37 drehbar gelagert. Die Spreizwalze ist an ihren Enden mit gegenläufigen nicht dargestellten Wendeln versehen, die zum Auseinanderbreiten des Umhüllungsmaterials dienen, wenn dieses in die Ballenformkammer 12 eingespeist wird.

Die Vorrichtung 24 weist noch ein Zuführgehäuse 38 mit einer ersten vorderen Wand 40 auf, die aus einem vertikal ausgerichteten Blechteil besteht, der sich zwischen den rückwärtigen Enden der Seitenwände 18 der Auswurfklappe 20 erstreckt und mit diesen verbunden ist. Gleichfalls weist das Zuführgehäuse 38 eine sich nach vorne unten erstreckende Bodenwand 42 auf, die zusammen mit der vorderen Wand 40 zu einem Querspalt 43 oder Materialdurchgangsweg konvergiert, der zwischen der vorderen Kante der Bodenwand 42 und der vorderen Wand 40 gebildet ist. Die obere Oberfläche 44 der Bodenwand 42 ist von vorne nach hinten konvex gebogen, wobei diese Formgebung speziell ausgewählt wurde, um mit der vorderen Wand 40 derart zusammenzuwirken, daß sich ein Reibschluß mit dem sich noch auf der Rolle befindlichen Umhüllungsmaterial ergibt, dessen Zweck nachfolgend noch näher erläutert wird. Zwei l-förmig ausgebildete Laschen 46 mit nach außen abgebogenen Enden sind mit den oberen rückwärtigen Teilen der Tragwände 26 über jeweils zwei Abstand zueinander aufweisende Schrauben 48 verbunden. Obere rückwärtige Endteile der gebogenen Bodenwand 42 liegen auf den abgebogenen Enden der beiden Laschen 46 auf und sind mit diesen über Schrauben 50 verbunden. Das rückwärtige Ende der Bodenwand 42 ist nach unten abgebogen, so daß eine abgerundete Kante 52 entsteht, die das Einlegen einer neuen Rolle mit Umhüllungsmaterial erleichtert, was ebenfalls an späterer Stelle noch näher zu erläutern ist. Das vordere Ende der Bodenwand 42 wird von Aussparungen 54 gehalten, die in obere vordere Teile der Tragwände 26 eingearbeitet sind. Ein jeweils dritter Tragpunkt für die Bodenwand 42 wird durch Kanten 56 gebildet, die durch eine Abknickung der oberen Seiten der Tragwände 26 in deren mittleren Bereich entstehen. Die seitlich gerichteten Bewegungen einer sich auf der Bodenwand 42 befindlichen Rolle mit Umhüllungsmaterial werden durch zwei sich gegenüberliegende Halteplatten 58 begrenzt, die jeweils mit der zugehörigen Tragwand 26 über die Schrauben 48 und die Schrauben 37 verbunden sind. Auch der obere Teil einer jeden Halteplatte 58 ist nach außen abgebogen, so daß eine abgerundete Kante 60 entsteht, gegen die die Seiten des Umhüllungsmaterials anliegen können.

Ein Ladebügel 62 oder -arm für eine neue Rolle mit Umhüllungsmaterial ist vertikal schwenkbar im rückwärtigen oberen Bereich der beiden Tragwände 26 angeordnet, in seiner in Fig. 2 dargestellten Position in Ladestellung und in seiner Stellung nach Fig. 3 in Betriebsstellung dargestellt. Im einzelnen sind hierzu an den oberen rückwärtigen Enden der Tragwände 26 zueinander ausgerichtete Scheiben 64 derart angeschweißt, daß eine horizontale Schwenkachse entsteht. Der Ladebügel 62 besteht aus einem Gestell mit sich gegenüberliegenden Schenkeln 66, die entsprechend dem Umfang einer vollen Rolle mit Umhüllungsmaterial gebogen sind und nach außen gebogene Enden 68 aufweisen, die von den Scheiben 64 aufgenommen werden. Eine Sicherung erfolgt durch Stifte 71, die durch entsprechende Bohrungen in den Enden 68 der Schenkel 66 gesteckt werden können. Die beiden Enden 68 abgelegenen Enden der Schenkel 66 sind miteinander über einen Querteil verbunden, der als Griffteil 72 dient. Wenn sich der Ladebügel 62 in seiner unteren in Fig. 2 wiedergegebenen Aufnahme- oder Ladestellung befindet, liegen die gebogenen Schenkel 66 relativ niedrig zur Aufnahme einer Rolle 74 mit dem Umhüllungsmaterial. Eine Rolle 74, die zwischen 75 und 80 Pfund wiegen kann, kann dann von dem Boden aus oder vorzugsweise von der Ladepritsche eines Fahrzeuges eingelegt werden. Jedenfalls sollen beim Einlegen von Hand einer Rolle 74 so wenig wie möglich Muskelkräfte erforderlich werden. In der Regel ist das Umhüllungsmaterial auf einer Papprolle 75 aufgerollt, die in Fig. 3 zweimal in ihren verschiedenen Positionen in strichlinierten Linien wiedergegeben ist. Sobald eine Rolle 74 in die entsprechende Rundungen aufweisenden Schenkel 66 des Ladebügels 62 eingelegt worden ist, wird der Rollenanfang in den Zuführmechanismus eingespeist, wozu zunächst der Rollenanfang über die Spreizwalze 36 gezogen wird. Danach kann die Rolle 74 mit dem Umhüllungsmaterial auf die Oberfläche 44 der Bodenwand 42 dadurch verbracht werden, daß der Griffteil 72 angehoben und in seine in Fig. 3 dargestellte Position verschwenkt wird, die der Betriebsstellung entspricht. Sodann läßt sich der Rollenanfang durch den Spalt zwischen den beiden Zuführwalzen 28 und 30 durchstecken. Die Tatsache, daß lediglich die Schenkel 66 des Ladebügels 62 mit der Rolle 74 Umhüllungsmaterial Kontakt haben, ist deshalb von Bedeutung, weil dadurch der beim Abrollen der Rolle entstehende Reibwiderstand relativ klein ist. An dieser Stelle ist darauf hinzuweisen, daß die Hebelarme und Anlenkstellen für den Ladebügel 62 derart gewählt sind, daß die zum Hochschwenken des Ladebügels 62 erforderliche Kraft etwa dem halben Rollengewicht entspricht und daß der in seine Betriebsstellung nach Fig. 3 verschwenkte Ladebügel 62 in dieser aufgrund der Schwerkraft verbleibt. Außerdem ist noch ein die Vorrichtung 24 in ihrer Betriebsstellung abdeckender Dekkel 76 vorgesehen, der in Fig. 2 in seiner hochgeschwenkten Offenstellung und in Fig. 3 in seiner geschlossenen Stellung wiedergegeben ist. Der Deckel 76 ist um Scharniere 78 verschwenkbar und über Winkeleisen 80 an die Rückkanten der Seitenwände 18 angeschlossen. In der geschlossenen oder Betriebsstellung liegen eine Oberwand 82 und eine Rückwand 84 des Deckels 76 dicht an dem Ladebügel 62. Damit schützt der Deckel 76 die Rolle 74 nicht nur gegen Fremdeinflüsse, sondern verhindert auch, daß der Ladebügel 62 aus seiner Stellung in Fig. 3 in seine Stellung nach Fig. 2 zurückfallen könnte. In seinen beiden Endstellungen wird der Deckel 76 über zwei Gasfedern 86 aktiv gehalten, die sich zwischen unteren rückwärtigen Stellen von Seitenwänden 88 des Deckels 76 und den Winkeleisen 80 erstrekken.

Nachfolgend wird auf die Wirkungsweise der gebogenen Bodenwand 42 und ihr Zusammenwirken mit der ersten Wand 40 kurz eingegangen. Unter der Annahme, daß sich eine komplette Rolle 74 mit Umhüllungsmaterial auf der gekrümmten Oberfläche 44 befindet, wie es in Fig. 3 dargestellt ist, erstreckt sich auch eine Bahn Umhüllungsmaterial von dem vorderen Ende der Rolle 74 nach unten durch den Querspalt 43, ist vorne und unten um die Spreizwalze 36 und dann nach rückwärts über die Oberseite der oberen Zuführwalze 28 und dann wieder nach vorne zwischen die Zuführwalzen hindurch geführt, wo sich ihr freies Ende befindet. Sobald in der Ballenformkammer 12 ein Rundballen fertig gewickelt ist, wird zum Umhüllen des Rundballens ein nicht dargestellter Antrieb für die Zuführwalzen 28, 30 eingeschaltet, wodurch letztere weiteres Material von der Rolle 74 abziehen, so daß das freie Ende in den Einzugsbereich 32 gelangt. Hier wird das freie Ende von den umlaufenden Riemen 14 erfaßt und über das Führungsblech 34 und gegebenenfalls weitere nicht dargestellte Führungsmittel weiter transportiert, bis es in die Ballenformkammer 12 zwischen den Riemen 14 und den fertig geformten Rundballen eintritt, von dem umlaufenden Rundballen erfaßt und um diesen gewickelt wird. Sobald der Rundballen in den gewünschten Lagen mit Umhüllungsmaterial umwickelt ist, wird eine nicht gezeigte Schneidvorrichtung betätigt, wodurch ein Messer das Umhüllungsmaterial in dem Segment abschneidet, das sich zwischen den Zuführwalzen und dem Einzugsbereich 32 befindet, in dem das Umhüllungsmaterial gespannt ist. Nach dem Abschneiden laufen die Riemen 14 nur noch so lange um, bis auch das abgeschnittene Ende sich um den Rundballen gewickelt hat. Der Antrieb für die Riemen wird ausgeschaltet und die Auswurfklappe 20 durch Hochschwenken geöffnet, so daß der umwickelte Rundballen in herkömmlicher Weise austreten kann.

Während des vorbeschriebenen Wickelvorgangs wird die Rolle 74 mit dem Umhüllungsmaterial daran gehindert, frei umzulaufen, und zwar aufgrund einer Bremskraft, die auf die Peripherie der Rolle 74 infolge des Reibschlusses mit der Bodenwand 42 und der vorderen Wand 40 einwirkt. Die Oberfläche 44 ist gekrümmt ausgebildet und so gerichtet, daß das Gewicht der Rolle 74 dazu tendiert, sie zwischen die Bodenwand 42 und die vordere Wand 40 zu klemmen. Hinzu kommt, daß die Konfiguration und Richtung der Bodenwand 42 so mit Bezug auf die vordere Wand 40 gewählt sind, daß beim Abwickeln des Umhüllungsmaterials und sich dabei verringerndem Rollendurchmesser die Keil- oder Klemmwirkung größer wird, aber der Reibschluß oder der Widerstand gegen das freie Umlaufen der Rolle 74 konstant bleibt, und zwar bis zu einem Zeitpunkt, zu dem alles Umhüllungsmaterial von der Papprolle 75 abgewickelt ist.

**Ansprüche**

1. Rundballenpresse (10) mit einer Vorrichtung (24) zum Umhüllen eines in einer Ballenformkammer (12) fertig gewickelten Rundballens aus landwirtschaftlichem Gut mit einem eine Bodenwand (42) aufweisenden Zuführgehäuse (38) und einer Ladevorrichtung für eine Rolle (74) aus Umhüllungsmaterial, die um eine horizontal verlaufende Achse aus einer tiefer gelegenen Ladeposition in eine höher gelegene Betriebsstellung verschwenkbar ist, dadurch gekennzeichnet, daß die Ladevorrichtung als Ladebügel (62) ausgebildet und derart geformt ist, daß in der Ladeposition die Rolle (74) mit Umhüllungsmaterial in dem Bügel des Ladebügels (62) satt aufliegt und in der Betriebsstellung auf die Bodenwand (42) abgelegt wird.

2. Rundballenpresse nach Anspruch 1, dadurch gekennzeichnet, daß der Ladebügel (62) zwei mit Querabstand zueinander angeordnete und parallel verlaufende Schenkel (66) aufweist, die zur Aufnahme der Rolle (74) mit dem Umhüllungsmaterial in der Ladeposition eine Krümmung aufweisen, die dem Außendurchmesser einer vollen Rolle (74) mit Umhüllungsmaterial entspricht.

3. Rundballenpresse nach Anspruch 1 oder 2, dadurch gekennzeichnet, daß die Achse, um die der Ladebügel (62) vertikal schwenkbar ist, unterhalb der rückwärtigen Kante (52) der Bodenwand (42) angeordnet ist, wobei die Kante (52) abgerundet und durch Abbiegen des rückwärtigen Endes der Bodenwand (42) gebildet ist.

4. Rundballenpresse nach einem oder mehreren der vorherigen Ansprüche, dadurch gekennzeichnet, daß die Achse, um die der Ladebügel (62) vertikal schwenkbar ist, derart angeordnet und der Ladebügel (62) derart geformt ist, daß er in seiner Betriebsstellung mit seinem der Achse abgelegenen Ende die Rolle (74) mit Umhüllungsmaterial übergreift und aufgrund seines Schwerpunktes in dieser Stellung verbleibt.

5. Rundballenpresse nach einem oder mehreren der vorherigen Ansprüche, dadurch gekennzeichnet, daß die Vorrichtung (24) zum Umhüllen eines Rundballens mit einem vertikal verschwenkbaren Deckel (76) versehen ist, der in der Ladestellung des Ladebügels (62) sich in einer hochgeschwenkten Offenstellung und in der Betriebsstellung des Ladebügels (62) in einer Stellung befindet, in der der Ladebügel (62) und die Bodenwand (42) zumindest von oben und an seinen Seiten von dem Deckel (76) umgriffen sind, wobei die horizontale Achse (Scharniere 78), um die der Deckel (76) verschwenkbar ist, oberhalb des sich in seiner Betriebsstellung befindlichen Ladebügels (62) angeordnet ist.

6. Rundballenpresse nach einem oder mehreren der vorherigen Ansprüche, dadurch gekennzeichnet, daß die Schenkel (66) des Ladebügels (62) an ihren Enden, die der Achse, um die der Ladebügel (62) verschwenkbar ist, abgelegen sind, über einen als Griffteil (72) ausgebildeten Querteil miteinander verbunden sind.

7. Rundballenpresse nach einem oder mehreren der vorherigen Ansprüche, dadurch gekennzeichnet, daß die Achse, um die der Ladebügel (62) vertikal verschwenkbar ist, aus abgebogenen Enden (68) der beiden Schenkel (66) des Ladebügels (62) gebildet ist, wobei diese Enden (68) in zueinander ausgerichteten Bohrungen in Scheiben (64) aufgenommen sind, die mit den rückwärtigen oberen Enden zweier mit Querabstand zueinander angeordneter Tragwände (26) des Zuführgehäuses (38) verbunden sind.

8. Rundballenpresse nach einem oder mehreren der vorherigen Ansprüche, dadurch gekennzeichnet, daß der Griff teil (72) der Achse, um die der Ladebügel (62) vertikal verschwenkbar ist, derart zugeordnet ist, daß zum Verschwenken des eine volle Rolle (74) mit Umhüllungsmaterial aufnehmenden Ladebügels (62) aus seiner Ladestellung in seine Betriebsstellung eine Kraft ausreicht, die etwa dem halben Rollengewicht entspricht.

9. Rundballenpresse nach einem oder mehreren der vorherigen Ansprüche, dadurch gekennzeichnet, daß die Schenkel (66) des Ladebügels (62) eine relativ kleine Breite aufweisen.

FIG. 1

**FIG. 2**

FIG. 3

## EINSCHLÄGIGE DOKUMENTE

| Kategorie | Kennzeichnung des Dokuments mit Angabe, soweit erforderlich, der maßgeblichen Teile | Betrifft Anspruch | KLASSIFIKATION DER ANMELDUNG (Int. Cl.5) |
|---|---|---|---|
| D,A | US-A-4691503 (DEERE)<br>* Spalte 2, Zeile 33 - Spalte 4, Zeile 35; Figuren 1, 2 * | 1 | A01F15/08 |
| | | | |
| | | | **RECHERCHIERTE SACHGEBIETE (Int. Cl.5)** |
| | | | A01F |

Der vorliegende Recherchenbericht wurde für alle Patentansprüche erstellt

| Recherchenort | Abschlußdatum der Recherche | Prüfer |
|---|---|---|
| DEN HAAG | 01 OKTOBER 1990 | HERYGERS J.J. |